# EUROPEAN PATENT SPECIFICATION

(11) **EP 2 726 195 B1**
(45) Date of publication and mention of the grant of the patent: **28.08.2019**
(21) Application number: 12805407.9
(22) Date of filing: 21.06.2012
(51) Int. Cl.: B01J 19/12, B01J 7/00, H05H 1/46, H05H 1/30

(54) **GAS CONVERSION SYSTEM**
GASUMWANDLUNGSSYSTEM
SYSTÈME DE TRANSFORMATION DE GAZ

(30) Priority: 28.06.2011 US 201161501767 P; 19.06.2012 US 201213526653
(43) Date of publication of application: 07.05.2014
(73) Proprietor: Recarbon Inc., Santa Clara, California 95054 (US)
(72) Inventor: TANIBATA, Toru, Wakayama-ken 649-6252 (JP); KOO, Jae-Mo, Palo Alto, California 94306 (US); LEE, Sang Hun, San Ramon, California 94582 (US)
(74) Representative: Mewburn Ellis LLP
(86) International application number: PCT/US2012/043421
(87) International publication number: WO 2013/003164

(56) References cited:
- EP-A2- 0 387 022
- WO-A1-2011/013702
- JP-A- 2003 027 241
- JP-A- 2003 164 723
- JP-A- 2004 313 998
- US-A- 5 131 992
- US-A1- 2002 127 155
- US-A1- 2002 127 155
- US-A1- 2010 001 744

## Description

### BACKGROUND OF THE INVENTION

### 1. Field of the Invention

The present invention relates to gas conversion systems, and more particularly to systems converting gases using multiple gas conversion means with microwave plasma.

### 2. Discussion of the Related Art

In recent years, microwave technology has been applied to generate various types of plasma. In some applications, required capacity of gas conversion using plasma is very large, and it requires a high power microwave generator. The existing microwave techniques are not suitable, or at best, highly inefficient due to one or more of the following drawbacks. First, the existing systems lack proper scalability, where scalability refers to the ability of a system to handle varying amounts of gas conversion capacity in a graceful manner or its ability to be enlarged/reduced to accommodate the variation of the gas conversion capacity. For instance, the required gas conversion capacity may widely vary depending on the applications. Second, the economics of scale for a magnetron increases rapidly as the output power increases. For instance, the price of a 10kW magnetron is much higher than the price of ten 1kW magnetrons. Third, the system configured with a higher power magnetron would have a possibility that the whole system needs to be shutdown once either magnetron or plasma applicator has an issue. Thus, there is a need for a gas conversion system that has high scalability, less system down time, and is cheaper than currently available gas conversion system without compromising the gas conversion capacity.

JP 2004-313998 A discloses a gas conversion system using a microwave plasma with control means, such as temperature measurements of the waveguide and plasma state sensors, to turn on and off the plasma and control the supply of the gas in response to abnormalities detected.

### SUMMARY OF THE INVENTION

In one embodiment of the present disclosure, a gas conversion system using a microwave plasma includes: a microwave waveguide for transmitting microwaves therethrough; a gas flow tube passing through the microwave waveguide and configured to transmit the microwaves through the gas flow tube; a first temperature controlling means for controlling a temperature of the microwave waveguide; a temperature sensor disposed near the gas flow tube and configured to measure a temperature of the microwave waveguide; an igniter located near the gas flow tube and configured to ignite a plasma inside the gas flow tube so that the plasma converts a gas flowing through the gas flow tube during operation; and a plasma detector located near the gas flow tube and configured to monitor the plasma.

In one embodiment of the present disclosure, a gas conversion system includes: an inlet gas manifold for supplying a gas; and a plurality of gas conversion units connected to the inlet gas manifold and configured to receive the gas therefrom. Each of the plurality of gas conversion units includes: a microwave waveguide for transmitting microwaves therethrough; a gas flow tube passing through the microwave waveguide and configured to transmit the microwaves through the gas flow tube; a first temperature controlling means for controlling a temperature of the microwave waveguide; a temperature sensor disposed near the gas flow tube and configured to measure a temperature of the microwave waveguide; an igniter located near the gas flow tube and configured to ignite a plasma inside the gas flow tube so that the plasma converts a gas flowing through the gas flow tube during operation; and a plasma detector located near the gas flow tube and configured to monitor the plasma. The gas conversion system also includes an outlet gas manifold connected to the plurality of gas conversion units and configured to receive therefrom.

### BRIEF DESCRIPTION OF THE DRAWINGS

FIG. 1 is a schematic diagram of a gas conversion system in accordance with one embodiment of the present invention.
FIGS. 2A - 2C are schematic cross sectional views of alternative embodiments of a portion of the gas conversion system in FIG. 1.
FIGS. 3A-3B are schematic diagrams of various embodiments of an integrated gas conversion system according to the present invention.
FIG. 4 is a schematic diagram of an integrated gas conversion system in accordance with another embodiment of the present invention.
FIG. 5 is a schematic cross sectional view of an alternative embodiment of a portion of the gas conversion system in FIG. 1 according to the present invention.
FIG. 6 is a schematic cross sectional view of an alternative embodiment of a portion of the gas conversion system in FIG. 1 according to the present invention.
FIGS. 7A-7D are top views of alternative embodiments of the gas flow tube in FIG. 1 according to the present invention.
FIGS. 8A - 8B are perspective views of alternative embodiments of the integrated gas conversion system in FIG. 4 according to the present invention.
FIGS. 9A - 9B are perspective views of alternative embodiments of the integrated gas conversion system in FIG. 4 according to the present invention.

### DETAILED DESCRIPTION OF THE PREFERRED EMBODIMENTS

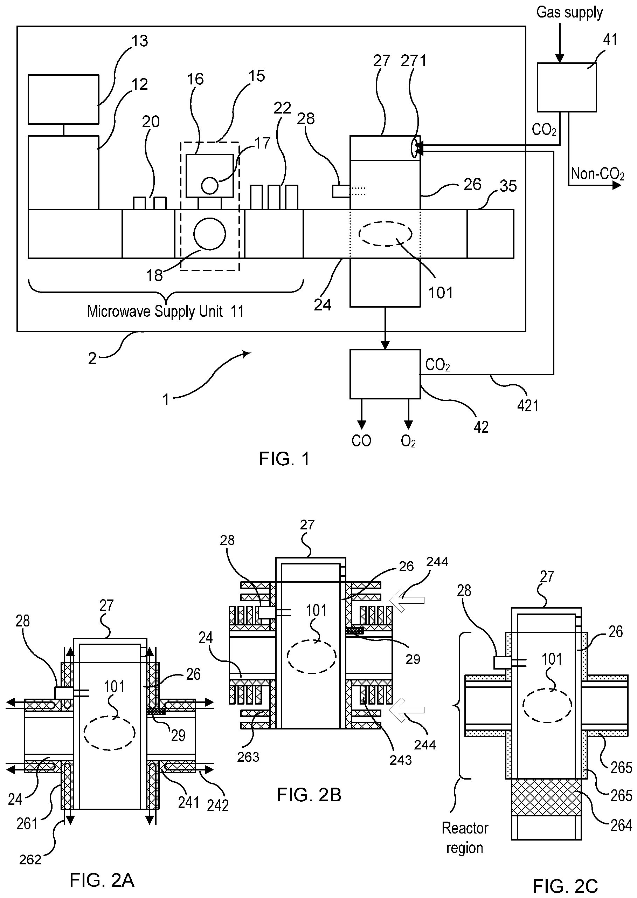

FIG. 1 is a schematic diagram of a gas conversion system 1 for generating microwave plasma and converting gas in accordance with one embodiment of the present invention. As illustrated, the gas conversion system 1 may include: a gas flow tube 26 that is transparent to microwave, such as glass, ceramic, or any other dielectric materials, preferably formed of quartz; a microwave supply unit 11 for providing microwave to the gas flow tube 26; and a waveguide 24 for transmitting microwave from the microwave supply unit 11 to the gas flow tube 26, where the gas flow tube 26 receives a gas and/or gas mixture from a gas supply, such as flue gases.

The microwave supply unit 11 provides microwave to the gas flow tube 26 and may include: a microwave generator 12 for generating microwave; a power supply 13 for supplying power to the microwave generator 12; and an isolator 15 having a dummy load 16 for dissipating reflected microwave that propagates toward the microwave generator 12 and a circulator 18 for directing the reflected microwave to the dummy load 16.

In one embodiment, the microwave supply unit 11 further includes a coupler 20 for measuring microwave powers; another coupler 17 located on the dummy load 16 to measure reflected microwave power to be dissipated at the dummy load 16; and a tuner 22 for reducing the microwave reflected from the gas flow tube 26. The components of the microwave supply unit 11 shown in FIG. 1 are well known and are listed herein for exemplary purposes only. Also, it is possible to replace the microwave supply unit 11 with a system having the capability to provide microwave to the gas flow tube 26 without deviating from the present invention. A phase shifter may be mounted between the isolator 15 and the tuner 22.

The gas conversion system 1 may include a high voltage spark igniter 28 on the gas flow tube 26 for an easy ignition of plasma in the gas flow tube 26; a top cap 27 having a gas inlet 271 to receive gas and supply it into the gas flow tube 26; and a sliding short 35 to adjust a standing wave position for an efficient plasma. The top cap 27 is preferably made of a metal to avoid microwave leakage through the top of the gas flow tube 26. Gas flow inside the gas flow tube 26 may have a swirling motion since the gas inlet 271 is configured as a side injection. The gas inlet 271 may be configured as a top injection to have a straight flow (not having a swirling motion) or may be configured as an angled injection.

The gas conversion system 1 may be used for a flue gas treatment. More particularly, it may be used for conversion of CO2 in the flue gas into CO and 02 by use of the plasma 101. The gas conversion system 1 may include an inlet gas separator 41 for separating the flue gas into CO2 and other components. The inlet gas separator 41 may use an existing method, such as absorption, cryogenic, or membrane. The inlet gas separator 41 supplies CO2 to the gas flow tube 26 through the gas inlet 271. A converted gas exhausted from the gas flow tube 26 is supplied to an outlet gas separator 42 for separating the converted gas into CO, 02, and CO2. The outlet gas separator 42 may use an existing method, such as absorption, pressure swing adsorption, or membrane. CO2 separated by the outlet gas separator 42 may be circulated to the gas inlet 271 for further conversion. Thus, the gas separator 42 and a gas line 421 form a gas circulation system.

FIG. 2A is a schematic cross sectional view of an alternative embodiment of a portion of the gas conversion system 1 in FIG. 1. As depicted, temperature controlling means 241 and 261 are installed onto the waveguide 24 and the gas flow tube 26 respectively, to control the temperatures of the waveguide 24 and the gas flow tube 26, respectively. Each of the temperature controlling means 241 and 261 may be a water-cooling system, a cooling system using other coolants, or a heater using a heating medium such as hot water, oil, or gas. The flows of the medium for the temperature controlling means 241 and 261 are shown as arrows 242 and 262. The temperatures of the waveguide 24 and the gas flow tube 26 may be controlled by adjusting the medium flow rate and by sensing the temperature of waveguide or gas flow tube using a thermometer 29.

FIG. 2B is a schematic cross sectional view of an alternative embodiment of a portion of the gas conversion system 1 in FIG. 1. As depicted, air-cooling means, such as heat sink, 243 and 263 are installed onto the waveguide 24 and the gas flow tube 26 respectively, to control the temperatures of the waveguide 24 and the gas flow tube 26, respectively. The air flow for cooling is illustrated as arrows 244. The temperatures of the waveguide 24 and the gas flow tube 26 may be controlled by adjusting air flow rate and by sensing the temperature using a thermometer 29.

FIG. 2C is a schematic cross sectional view of an alternative embodiment of a portion of the gas conversion system 1 in FIG. 1. As depicted, a heat exchanger 264 is installed at downstream of the gas flow tube 26 so that the temperature of the gas exiting the reactor region is maintained at a predetermined level. The reactor region may be insulated with an insulation material 265 so that the gas temperature in the reactor region is maintained at a higher level to thereby increase the conversion efficiency of the reactor. The heat exchanger 264 may be a rapid gas cooling means using a coolant, such as water.

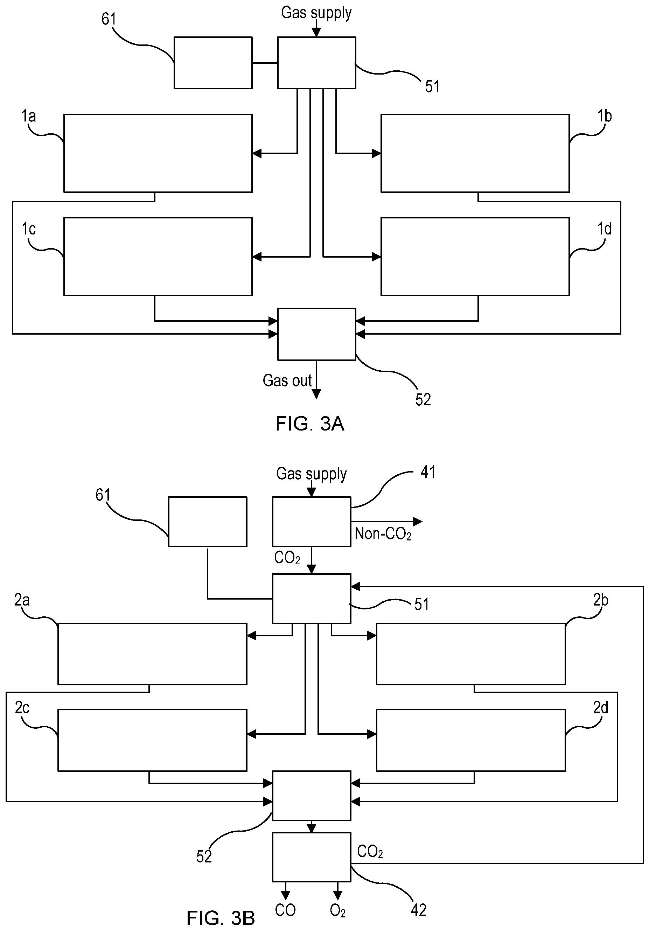

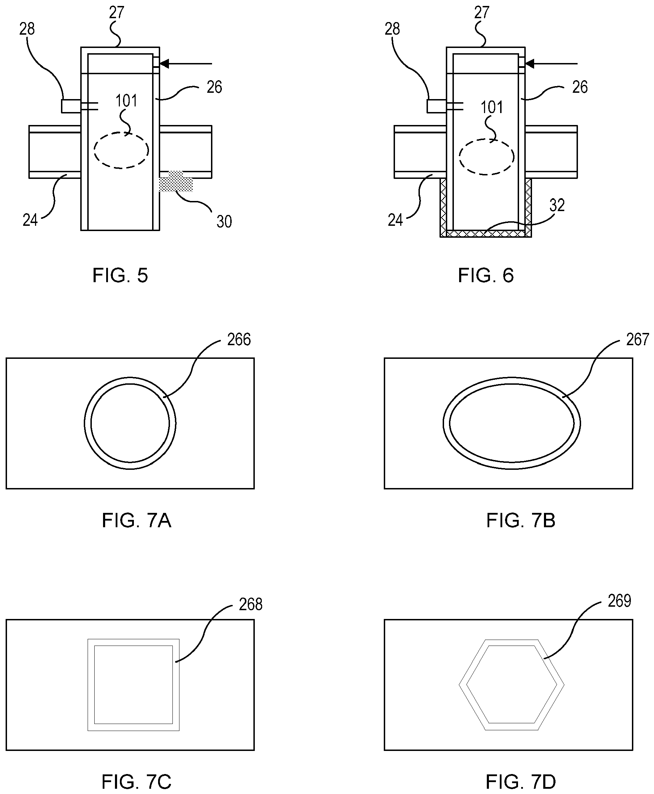

FIGS. 3A-3B are schematic diagrams of various embodiments of an integrated gas conversion system according to the present invention. FIG. 3A illustrates an integrated gas conversion system having the four gas conversion systems 1a - 1d, where each of the four gas conversion systems 1a - 1b is similar to the system 1 shown in FIG. 1. The flue gas is supplied to an inlet gas manifold 51 controlled by a controller 61. The flue gas supplied to each of the four gas conversion systems 1a - 1d is separated by a gas separator and converted by use of plasma, and subsequently sent to an outlet gas manifold 52. Since each gas conversion system 1a - 1d has similar mechanisms and functions of the system 1 in FIG. 1, gas separation and CO2 circulation are done inside of the gas conversion systems 1a - 1d. When the gas conversion system fails to operate, i.e., the plasma is extinguished inadvertently, the controller 61 controls gas distributions from the inlet gas manifold 51 so that the gas is not supplied to the failed gas conversion system. In addition, the controller 61 may control the total gas flow rate supplied to the gas conversion systems depending on the number of the gas conversion systems under operation. A detector for monitoring the plasma in each reactor region is described in conjunction with FIG. 5.

FIG. 3B illustrates another integrated gas conversion system having the four gas conversion units 2a - 2d. Each gas conversion system 2a - 2d has similar mechanisms and functions of the gas conversion unit 2 in FIG. 1. The gas conversion unit 2, as depicted in FIG. 1, does not contain any inlet/outlet gas separator or gas circulation system. The flue gas is supplied to the inlet gas separator 41 and separated CO2 is supplied to the inlet gas manifold 51 controlled by the controller 61. CO2 supplied to the four gas conversion systems 2a - 2d are converted by plasma, and subsequently sent to the outlet gas manifold 52. The converted gas collected at the outlet gas manifold 52 is supplied to the outlet gas separator 42. Since each gas conversion system 2a - 2d does not contain any gas separator or gas circulation system in FIG. 1, the gas separation and CO2 circulation are done outside of the gas conversion units 2a - 2d. When the gas conversion system fails to operate, i.e., the plasma is extinguished inadvertently, the controller 61 controls gas distributions from the inlet gas manifold 51 so that the gas is not supplied to the failed gas conversion system. In addition, the controller 61 may control the total gas flow rate supplied to the gas conversion systems depending on the number of the gas conversion systems under operation. A detector for monitoring the plasma in each reactor region is described in conjunction with FIG. 5.

Based on the embodiment shown in FIG. 3B, one may configure another integrated gas conversion system by moving the outlet gas separator 42 and the CO2 circulation system into each gas conversion systems 2a - 2d. Or one may configure another integrated gas conversion system by moving only the outlet gas separator 42 into each gas conversion systems 2a - 2d.

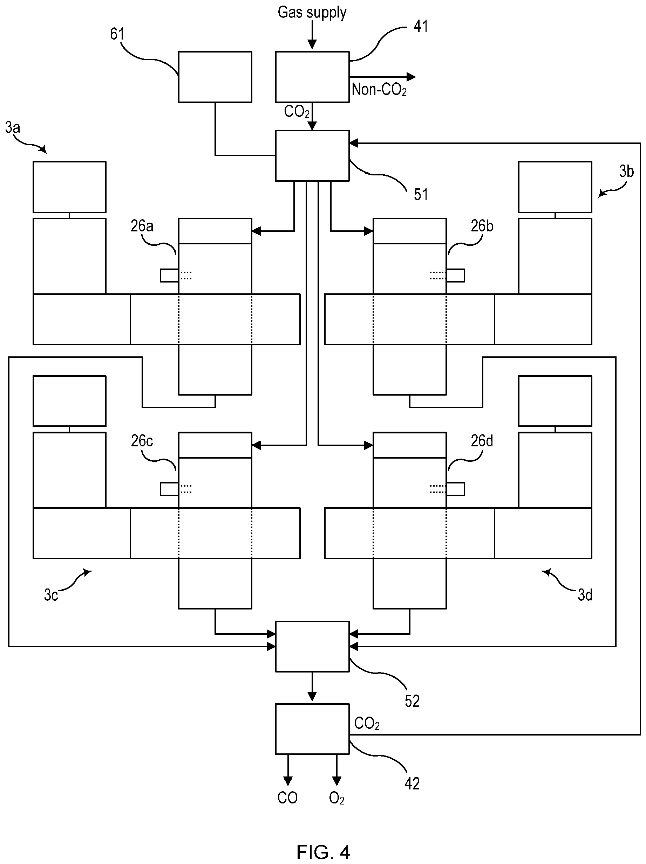

FIG. 4 illustrates another integrated gas conversion system containing the four gas conversion systems 3a - 3d. Each of the gas conversion systems 3a - 3d is similar to the gas conversion unit 2 in FIG. 1, with the difference that each of the gas conversion systems 3a - 3d does not include the isolator 15, the coupler 20, the tuner 22, and the sliding short 35. Each of the gas conversion systems 3a - 3d is fully optimized for efficient plasma generation, and thus these elements are not required for proper operation of the system. The flue gas is supplied to the inlet gas separator 41 and separated CO2 is supplied to the inlet gas manifold 51 controlled by a controller 61. The separated CO2 is supplied to the four gas conversion systems 3a - 3d having four gas flow tubes 26a - 26d, respectively, and subsequently converted by the plasma, and then sent to the outlet gas manifold 52. The converted gas collected at the outlet gas manifold 52 is supplied to the outlet gas separator 42. Since each gas conversion system does not have any gas separation or CO2 circulation system, gas separation and CO2 circulation are done outside the gas conversion systems 3a - 3d. When the gas conversion system fails to operate, i.e., the plasma is extinguished inadvertently, the controller 61 controls gas distributions from the inlet gas manifold 51 so that the gas is not supplied to the failed gas conversion system. In addition, the controller 61 may control the total gas flow rate supplied to the gas conversion systems depending on the number of the gas conversion systems under operation. A detector for monitoring the plasma in each reactor region is described in conjunction with FIG. 5.

FIG. 5 is a schematic cross sectional view of an alternative embodiment of a portion of the gas conversion system in FIG. 1 according to the present invention. As depicted, a plasma detector 30 is installed onto the waveguide 24 to monitor the plasma, to thereby monitor the proper operation of the gas conversion system 1. The plasma detector 30 may be an optical sensor to detect a light emission of plasma or a temperature sensor to detect a temperature increase due to plasma generation. The plasma detector 30 may be installed on the gas flow tube 26 instead.

FIG. 6 is a schematic cross sectional view of an alternative embodiment of a portion of the gas conversion system 1 in FIG. 1 according to the present invention. A mesh plate 32, preferably a grounded metal mesh plate, is installed at the bottom of the gas flow tube 26 to enhance the stability of gas flow and plasma, and to avoid a microwave leakage through the bottom of the gas flow tube 26. The mesh size of the mesh plate 32 is much smaller than the wavelength of the microwave generated by the microwave supply unit 11. It is preferred to install the mesh plate 32 at a location having a certain distance from the bottom surface of the waveguide 24 to have enough volume for plasma and avoid arcing inside the gas flow tube 26.

FIGS. 7A-7D are top views of alternative embodiments of the gas flow tube 26 in FIG. 1 according to the present invention. As depicted, the cross sectional shape of the gas flow tubes 266 - 269 may be circle, oval, square, rectangle, or hexagon. It should be apparent to those of ordinary skill that other suitable geometrical shape can be used.

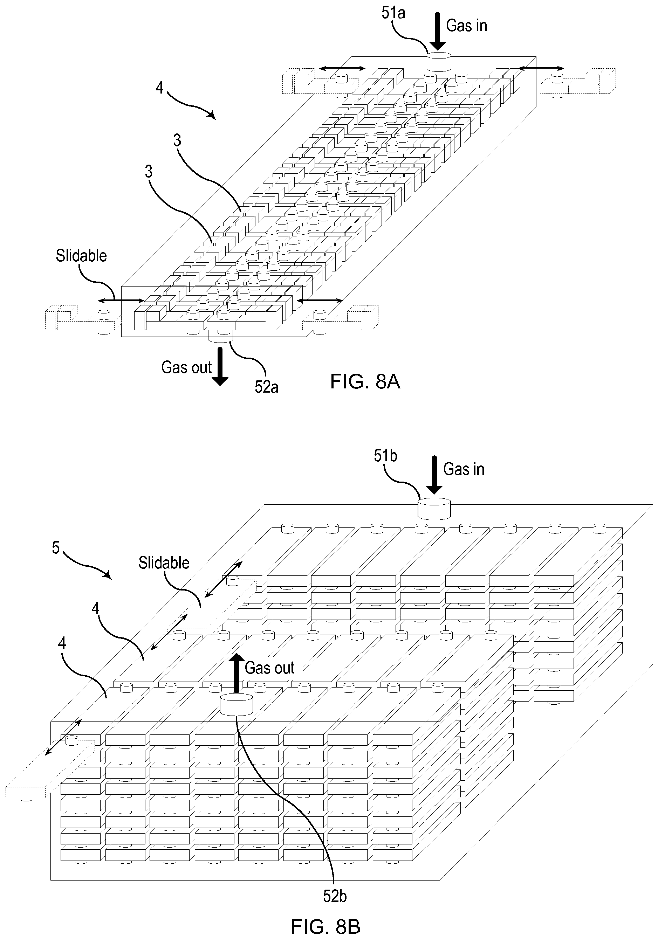

FIG. 8A is a perspective view of an alternative embodiment of the integrated gas conversion system in FIG. 4 according to the present invention. As depicted, the integrated gas conversion module 4 includes a plurality of, say fifty, gas conversion systems 3. It contains an inlet gas manifold 51a controlled by a controller (not shown) and an outlet gas manifold 52a. Each gas conversion system 3 is slidably mounted so that it can be easily accessed when maintenance is required.

FIG. 8B is a perspective view of an alternative embodiment of the integrated gas conversion system in FIG. 4 according to the present invention. As depicted, an integrated gas conversion system 5 includes a plurality of, say one hundred and ninety two, gas conversion modules 4. It contains an inlet gas manifold 51b controlled by a controller (not shown) and an outlet gas manifold 52b. Each gas conversion module 4 is slidably mounted so that it can be easily accessed when maintenance is required. The flue gas is supplied to the inlet gas separator (not shown) and separated CO2 is supplied to the inlet gas manifold 51b and then supplied to each gas conversion system 3 through the inlet gas manifold 51a on the gas conversion modules 4. The gas converted by plasma is collected to the outlet gas manifold 52b through the outlet gas manifold 52a on the gas conversion modules 4, and then delivered to the outlet gas separator (not shown). The operations before the inlet gas separator and after the outlet gas separator including CO2 circulation are the same as the system shown in FIG. 4, and the descriptions are not repeated for brevity.

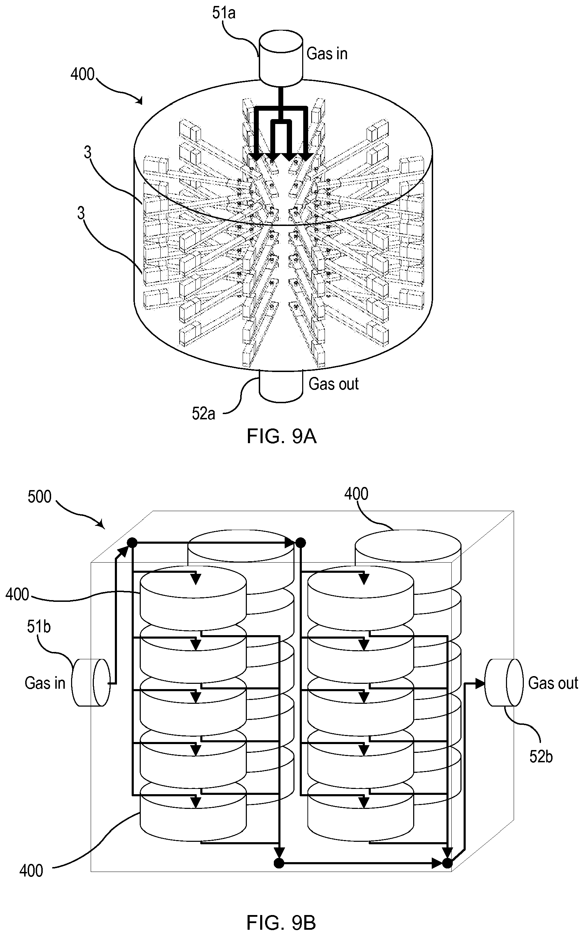

FIG. 9A is a perspective view of an alternative embodiment of the integrated gas conversion system in FIG. 4 according to the present invention. As depicted, the integrated gas conversion module 400 includes a plurality of, say sixty, gas conversion systems 3. It contains an inlet gas manifold 51a controlled by a controller (not shown) and an outlet gas manifold 52a. Each gas conversion system 3 is radially arranged so that gas tubing is concentrated at the center for ease of plumbing and the human operator has enough space for maintenance.

FIG. 9B is a perspective view of an alternative embodiment of the integrated gas conversion system in FIG. 4 according to the present invention. As depicted, an integrated gas conversion system 500 includes a plurality of, say twenty, gas conversion modules 400. It contains an inlet gas manifold 51b controlled by a controller (not shown) and an outlet gas manifold 52b. The flue gas is supplied to the inlet gas separator (not shown) and separated CO2 is supplied to the inlet gas manifold 51b and then supplied to each gas conversion system 3 through the inlet gas manifold 51a on the gas conversion modules 400. The gas converted by plasma is collected to the outlet gas manifold 52b through the outlet gas manifold 52a on the gas conversion modules 400, and then delivered to the outlet gas separator (not shown). The operations before the inlet gas separator and after the outlet gas separator including CO2 circulation are the same as the system shown in FIG. 4, and the descriptions are not repeated for brevity.

It is noted that the integrated gas conversion systems shown in FIGS. 3A, 3B, and 4 have only four gas conversion systems. It is also noted that the integrated gas conversion module shown in FIG. 8A and the integrated gas conversion system shown in FIG. 8B have fifty gas conversion systems and the one hundred and ninety two gas conversion modules, respectively. However, it should be apparent to those of ordinary skill in the art that the module or system may include any other suitable number of gas conversion modules or systems. Likewise, integrated gas conversion modules shown in FIGS. 9A and 9B may have other suitable number of gas conversion systems and modules.

The price of the microwave generator 12a, especially the magnetron, increases rapidly as its power output increases. For instance, the price of ten magnetrons of the commercially available microwave oven is considerably lower than that of one high power magnetron that has an output power ten times that of the microwave oven. Thus, the multiple gas conversion systems in FIGS. 3A - 8B allow the designer to build a low cost gas conversion system without compromising the total conversion capacity. Also, it allows for establishing a system having less system down time when a failure occurs by controlling the gas distribution.

It should be understood, of course, that the foregoing relates to exemplary embodiments of the invention and that modifications may be made without departing from the scope of the invention as set forth in the following claims.

## Claims

1. A gas conversion system (1) using a microwave plasma, comprising:
a microwave waveguide (24) for transmitting microwaves therethrough;
a gas flow tube (26) passing through the microwave waveguide (24) and configured to transmit the microwaves through the gas flow tube (26);
a temperature sensor (29) configured to measure a temperature of the microwave waveguide (24);
a first temperature controlling means (241) for controlling a temperature of the microwave waveguide (24), wherein the first temperature controlling means (241) includes a cooling system using a coolant;
an igniter (28) located near the gas flow tube (26) and configured to ignite a plasma inside the gas flow tube (26) so that the plasma converts a gas flowing through the gas flow tube (26) during operation; and
a plasma detector (30) located near the gas flow tube (26) and configured to monitor the plasma;
**characterized in that** the temperature sensor (29) is disposed near the gas flow tube (26); and that the first temperature controlling means (241) is configured such that the temperature of the microwave waveguide (24) is controlled based on the temperature measured by the temperature sensor (29) near the gas flow tube (26).

2. A gas conversion system (1) as recited in claim 1, further comprising:
a gas inlet (271) disposed on the gas flow tube (26) and configured to receive the gas.

3. A gas conversion system (1) as recited in claim 1, further comprising:
a second temperature controlling means (261) for controlling a temperature of the gas flow tube (26).

4. A gas conversion system (1) as recited in claim 3, wherein the second temperature controlling means (261) includes a cooling system using a coolant.

5. A gas conversion system (1) as recited in claim 1, where the gas contains carbon dioxide and the plasma is adapted to convert the carbon dioxide into carbon monoxide and oxygen.

6. A gas conversion system (1) as recited in claim 1, further comprising:
a grounded metal mesh plate (32) disposed at a bottom of the gas flow tube (26) and configured to prevent microwave leakage through the gas flow tube (26).

7. A gas conversion system (1) as recited in claim 1, further comprising:
an inlet gas separator (41) located upstream of the gas flow tube (26) and configured to separate carbon dioxide contained in the gas from other components of the gas;
an outlet gas separator (42) located downstream of the gas flow tube (26) and configured to separate carbon dioxide contained in the gas converted by the plasma; and
a gas line (421) for directing the carbon dioxide separated by the outlet gas separator (42) to a gas inlet (271) of the gas flow tube (26) to thereby form a gas circulation system.

8. A gas conversion system (1) as recited in claim 1, wherein the gas flow tube (26) is configured to impart a swirling motion to the gas.

9. A gas conversion system (1) as recited in claim 1, wherein the gas flow tube (26) is made of quartz.

10. A gas conversion system (1) as recited in claim 1, wherein the plasma detector (30) is an optical sensor for sensing a light emission from the plasma.

11. A gas conversion system (1) as recited in claim 1, wherein the igniter (28) is a high voltage spark igniter.

12. A gas conversion system (1) as recited in claim 1, further comprising:
a temperature sensor disposed near the gas flow tube (26) and configured to measure a temperature of the gas flow tube. tube (26).

13. A gas conversion system, comprising:
an inlet gas manifold (51) for supplying a gas;
a plurality of gas conversion systems according to claim 1 coupled to the inlet gas manifold (51) and configured to receive the gas therefrom; and
an outlet gas manifold (52) connected to the plurality of gas conversion systems and configured to receive therefrom.

14. A gas conversion system as recited in claim 13, wherein each of the plurality of gas conversion systems further includes:
an inlet gas separator (41);
an outlet gas separator (42); and
a gas line for directing carbon dioxide separated by the outlet gas separator to a gas inlet of the gas flow tube to thereby form a gas circulation system.

15. A gas conversion system as defined in claim 13, further comprising:
an inlet gas separator (41) disposed upstream of the inlet gas manifold (51);
an outlet gas separator (42) disposed downstream of the outlet gas manifold (52); and
a gas line for directing carbon dioxide separated by the outlet gas separator to the inlet gas manifold to thereby form a gas circulation system.

16. A gas conversion system as recited in claim 13, wherein each of the plurality of gas conversion systems further includes a second temperature controlling means (261) for controlling a temperature of the gas flow tube.

## Patentansprüche

1. Gasumwandlungssystem (1) durch Verwendung eines Mikrowellenplasmas, umfassend:
einen Mikrowellen-Wellenleiter (24) zum Senden von Mikrowellen durch diesen;
ein Gasdurchflussrohr (26), das durch den Mikrowellen-Wellenleiter (24) hindurch verläuft und konfiguriert ist, die Mikrowellen durch das Gasdurchflussrohr (26) hindurch zu übertragen;
einen Temperatursensor (29), der konfiguriert ist, eine Temperatur des Mikrowellen-Wellenleiters (24) zu messen;
ein erstes Temperatursteuermittel (241) zum Steuern einer Temperatur des Mikrowellen-Wellenleiters (24), wobei das erste Temperatursteuermittel (241) ein Kühlsystem unter Verwendung eines Kühlmittels umfasst;
eine Zündvorrichtung (28), die nahe dem Gasdurchflussrohr (26) angeordnet und konfiguriert ist, ein Plasma im Inneren des Gasdurchflussrohrs (26) zu zünden, sodass das Plasma ein durch das Gasdurchflussrohr (26) strömendes Gas während des Betriebs umwandelt; und
einen Plasmadetektor (30), der nahe dem Gasdurchflussrohr (26) angeordnet und konfiguriert ist, das Plasma zu überwachen;
**dadurch gekennzeichnet,**
**dass** der Temperatursensor (29) nahe dem Gasdurchflussrohr (26) angeordnet ist; und
**dass** das erste Temperatursteuermittel (241) derart konfiguriert ist, dass die Temperatur des Mikrowellen-Wellenleiters (24) auf Basis der durch den Temperatursensor (29) nahe dem Gasdurchflussrohr (26) gemessenen Temperatur gesteuert wird.

2. Gasumwandlungssystem (1) nach Anspruch 1, ferner umfassend:
einen Gaseinlass (271), der auf dem Gasdurchflussrohr (26) angeordnet und zum Aufnehmen des Gases konfiguriert ist.

3. Gasumwandlungssystem (1) nach Anspruch 1, ferner umfassend:
ein zweites Temperatursteuermittel (261) zum Steuern einer Temperatur des Gasdurchflussrohrs (26).

4. Gasumwandlungssystem (1) nach Anspruch 3, wobei das zweite Temperatursteuermittel (261) ein Kühlsystem unter Verwendung eines Kühlmittels umfasst.

5. Gasumwandlungssystem (1) nach Anspruch 1, wobei das Gas Kohlendioxid enthält, und das Plasma geeignet ist, das Kohlendioxid in Kohlenmonoxid und Sauerstoff umzuwandeln.

6. Gasumwandlungssystem (1) nach Anspruch 1, ferner umfassend:
eine geerdete Metallgitterplatte (32), die an einer Unterseite des Gasdurchflussrohrs (26) angeordnet und konfiguriert ist, ein Austreten von Mikrowellen durch das Gasdurchflussrohr (26) hindurch zu verhindern.

7. Gasumwandlungssystem (1) nach Anspruch 1, ferner umfassend:
eine Einlass-Gastrennvorrichtung (41), die stromaufwärts des Gasdurchflussrohrs (26) angeordnet und konfiguriert ist, Kohlendioxid, das in dem Gas enthalten ist, von anderen Komponenten des Gases zu trennen;
eine Auslass-Gastrennvorrichtung (42), die stromabwärts des Gasdurchflussrohrs (26) angeordnet und konfiguriert ist, Kohlendioxid, das in dem durch das Plasma umgewandelten Gas enthalten ist, abzutrennen; und
eine Gasleitung (421) zum Leiten des durch die Auslass-Gastrennvorrichtung (42) abgetrennten Kohlendioxids zu einem Gaseinlass (271) des Gasdurchflussrohrs (26), um dadurch ein Gaszirkulationssystem zu bilden.

8. Gasumwandlungssystem (1) nach Anspruch 1, wobei das Gasdurchflussrohr (26) konfiguriert ist, auf das Gas eine Wirbelbewegung zu übertragen.

9. Gasumwandlungssystem (1) nach Anspruch 1, wobei das Gasdurchflussrohr (26) aus Quarz hergestellt ist.

10. Gasumwandlungssystem (1) nach Anspruch 1, wobei der Plasmadetektor (30) ein optischer Sensor zum Abfühlen einer Lichtemission aus dem Plasma ist.

11. Gasumwandlungssystem (1) nach Anspruch 1, wobei die Zündvorrichtung (28) eine Hochspannungsfunkenzündvorrichtung ist.

12. Gasumwandlungssystem (1) nach Anspruch 1, ferner umfassend:
einen Temperatursensor, der nahe dem Gasdurchflussrohr (26) angeordnet und konfiguriert ist, eine Temperatur des Gasdurchflussrohrs (26) zu messen.

13. Gasumwandlungssystem, umfassend:
einen Einlass-Gasverteiler (51) zum Zuführen eines Gases;
eine Vielzahl von Gasumwandlungssystemen gemäß Anspruch 1, die mit dem Einlass-Gasverteiler (51) gekoppelt und konfiguriert sind, das Gas von diesem aufzunehmen; und
einen Auslass-Gasverteiler (52), der mit der Vielzahl von Gasumwandlungssystemen verbunden und konfiguriert ist, Gas von diesen aufzunehmen.

14. Gasumwandlungssystem nach Anspruch 13, wobei jedes aus der Vielzahl von Gasumwandlungssystemen ferner Folgendes umfasst:
eine Einlass-Gastrennvorrichtung (41);
eine Auslass-Gastrennvorrichtung (42); und
eine Gasleitung zum Leiten von Kohlendioxid, das durch die Auslass-Gasvorrichtung abgetrennt wird, zu einem Gaseinlass des Gasdurchflussrohrs, um dadurch ein Gaszirkulationssystem zu bilden.

15. Gasumwandlungssystem nach Anspruch 13, ferner umfassend:
eine Einlass-Gastrennvorrichtung (41), die stromaufwärts des Einlass-Gasverteilers (51) angeordnet ist;
eine Auslass-Gastrennvorrichtung (42), die stromabwärts des Auslass-Gasverteilers (52) angeordnet ist; und
eine Gasleitung zum Leiten von Kohlendioxid, das durch die Auslass-Gastrennvorrichtung abgetrennt wird, zum Einlass-Gasverteiler, um dadurch ein Gaszirkulationssystem zu bilden.

16. Gasumwandlungssystem nach Anspruch 13, wobei jedes aus der Vielzahl von Gasumwandlungssystemen ferner ein zweites Temperatursteuermittel (261) zum Steuern einer Temperatur des Gasdurchflussrohrs umfasst.

## Revendications

1. Système de transformation de gaz (1) à l'aide d'un plasma à micro-ondes, comprenant :
un guide d'onde à micro-ondes (24) destiné à transmettre des micro-ondes ;
un tube d'écoulement de gaz (26) qui passe par le guide d'onde à micro-ondes (24) et est configuré pour transmettre les micro-ondes par le biais du tube d'écoulement de gaz (26) ;
un capteur de température (29) configuré pour mesurer une température du guide d'onde à micro-ondes (24) ;
un premier moyen de régulation de la température (241) destiné à réguler une température du guide d'onde à micro-ondes (24), dans lequel le premier moyen de régulation de a température (241) comprend un système de refroidissement qui utilise un réfrigérant ;
un allumeur (28) situé près du tube d'écoulement de gaz (26) et configuré pour allumer un plasma à l'intérieur du tube d'écoulement de gaz (26) de sorte que le plasma convertisse un gaz qui circule dans le tube d'écoulement de gaz (26) pendant l'opération ; et
un détecteur de plasma (30) situé près du tube d'écoulement de gaz (26) et configuré pour surveiller le plasma ;
**caractérisé en ce que** le capteur de température (29) est disposé près du tube d'écoulement de gaz (26) ; et **en ce que** le premier moyen de régulation de la température (241) est configuré de sorte que la température du guide d'onde à micro-ondes (24) soit régulée sur la base de la température mesurée par le capteur de température (29) près du tube d'écoulement de gaz (26).

2. Système de transformation de gaz (1) selon la revendication 1, comprenant en outre :
une admission de gaz (271) disposée sur le tube d'écoulement de gaz (26) et configurée pour recevoir le gaz.

3. Système de transformation de gaz (1) selon la revendication 1, comprenant en outre :
un second moyen de régulation de la température (261) destiné à réguler une température du tube d'écoulement de gaz (26).

4. Système de transformation de gaz (1) selon la revendication 3, dans lequel le second moyen de régulation de la température (261) comprend un système de refroidissement qui utilise un réfrigérant.

5. Système de transformation de gaz (1) selon la revendication 1, dans lequel le gaz contient du dioxyde de carbone et le plasma est adapté pour convertir le dioxyde de carbone en monoxyde de carbone et un oxygène.

6. Système de transformation de gaz (1) selon la revendication 1, comprenant en outre :
une plaque à maillage métallique mise à la terre (32) disposée au niveau d'une partie inférieure du tube d'écoulement de gaz (26) et configurée pour empêcher toute fuite de micro-ondes dans le tube d'écoulement de gaz (26).

7. Système de transformation de gaz (1) selon la revendication 1, comprenant en outre :
un séparateur de gaz d'admission (41) situé en amont du tube d'écoulement de gaz (26) et configuré pour séparer le dioxyde de carbone contenu dans le gaz des autres composants du gaz ;
un séparateur de gaz de sortie (42) situé en aval du tube d'écoulement de gaz (26) et configuré pour séparer le dioxyde de carbone contenu dans le gaz converti par le plasma ; et
un conduit de gaz (421) destiné à orienter le dioxyde de carbone séparé par le séparateur de gaz de sortie (42) vers une admission de gaz (271) du tube d'écoulement de gaz (26) afin de former un système de circulation de gaz.

8. Système de transformation de gaz (1) selon la revendication 1, dans lequel le tube d'écoulement de gaz (26) est configuré pour transmettre un mouvement de tourbillon au gaz.

9. Système de transformation de gaz (1) selon la revendication 1, dans lequel le tube d'écoulement de gaz (26) est composé de quartz.

10. Système de transformation de gaz (1) selon la revendication 1, dans lequel le détecteur de plasma (30) est un capteur optique destiné à détecter une émission de lumière du plasma.

11. Système de transformation de gaz (1) selon la revendication 1, dans lequel l'allumeur (28) est un allumeur à étincelle à haute tension.

12. Système de transformation de gaz (1) selon la revendication 1, comprenant en outre :
un capteur de température disposé près du tube d'écoulement de gaz (26) et configuré pour mesurer une température du tube d'écoulement de gaz (26).

13. Système de transformation de gaz, comprenant :
un collecteur de gaz d'admission (51) destiné à fournir un gaz ;
une pluralité de systèmes de transformation de gaz selon la revendication 1 reliés au collecteur de gaz d'admission (51) et configurés pour recevoir le gaz de la part de celui-ci ; et
un collecteur de gaz de sortie (52) relié à la pluralité de systèmes de transformation de gaz et configurés pour recevoir le gaz de la part de ceux-ci.

14. Système de transformation de gaz (1) selon la revendication 13, dans lequel chacun de la pluralité de systèmes de transformation de gaz comprend en outre :
un séparateur de gaz d'admission (41) ;
un séparateur de gaz de sortie (42) ; et
un conduit de gaz destiné à orienter le dioxyde de carbone séparé par le séparateur de gaz de sortie vers une admission de gaz du tube d'écoulement de gaz afin de former un système de circulation de gaz.

15. Système de transformation de gaz (1) selon la revendication 13, comprenant en outre :
un séparateur de gaz d'admission (41) disposé en amont du collecteur de gaz d'admission (51) ;
un séparateur de gaz de sortie (42) disposé en aval du collecteur de gaz de sortie (52) ; et
un conduit de gaz destiné à orienter le dioxyde de carbone séparé par le séparateur de gaz de sortie vers le collecteur de gaz d'admission afin de former un système de circulation de gaz.

16. Système de transformation de gaz (1) selon la revendication 13, dans lequel chacun de la pluralité de systèmes de transformation de gaz comprend en outre un second moyen de régulation de la température (261) destiné à réguler une température du tube d'écoulement de gaz.
